# EUROPÄISCHE PATENTSCHRIFT

(11) **EP 3 570 401 B1**
(45) Veröffentlichungstag und Bekanntmachung des Hinweises auf die Patenterteilung: **29.06.2022**
(21) Anmeldenummer: 19173817.8
(22) Anmeldetag: 10.05.2019
(51) Int. Cl.: H02J 3/46, H02J 3/38, H02J 11/00

(54) **WINDPARK MIT EIGENBEDARFSKOMPENSATION**
WIND FARM WITH COMPENSATION OF AUXILIARY POWER
PARC ÉOLIEN À COMPENSATION DE CIRCUITS AUXILIAURES

(30) Priorität: 14.05.2018 DE 102018003854
(43) Veröffentlichungstag der Anmeldung: 20.11.2019
(73) Patentinhaber: Siemens Gamesa Renewable Energy Service GmbH, 20097 Hamburg (DE)
(72) Erfinder: Hansen, Marco, 25774 Groven (DE)
(74) Vertreter: Glawe, Delfs, Moll

(56) Entgegenhaltungen:
- EP-A1- 2 824 323
- EP-A1- 2 891 794
- EP-A2- 1 961 957
- DE-A1-102012 204 239
- DE-A1-102015 201 431
- DE-U1-202004 009 071
- US-A1- 2009 206 603
- US-A1- 2012 146 423
- US-A1- 2013 154 262
- US-A1- 2015 256 030

## Beschreibung

Die Erfindung betrifft ein Verfahren zum Betreiben eines Windparks an einem Netz umfassend einen Parkmaster und eine Mehrzahl von Windenergieanlagen, wobei die Windenergieanlagen für ihren Betrieb eine Minimalleistung erfordern. Die Windenergieanlagen weisen ferner für den Eigenbedarf mindestens eine leistungsverbrauchende Last auf.

Moderne Windenergieanlagen mit all ihren elektrischen und elektronischen Komponenten haben einen beträchtlichen Eigenbedarf. Er erreicht beispielsweise bei Windenergieanlagen der 3MW-Klasse eine Größenordnung von bis zu 20.000 kWh pro Jahr. Da es wegen des umfangreichen Zubaus von Windenergie zunehmend zum verordneten Stillstand von Windparks wegen drohender Netz-überlastung kommt, kann als Folge des Stillstands der Eigenbedarf der Windenergieanlagen nicht mehr aus der eigenen Produktion gedeckt werden. Stattdessen muss Leistung vom Netz bezogen werden. Das ist für den Betreiber teuer.

Zur Energieversorgung von Windenergieanlagen ist es aus einem anderen Zusammenhang bekannt, nämlich bei der Inbetriebnahme von Windparks, die elektrische Leistungsabgabe einer vorab gestarteten Windenergieanlage für die Inbetriebnahme des Parks im Ganzen (WO 2004/099604 A2, EP 2 891 794 A1) zu verwenden. Im Grunde geht es hierbei um eine Art von Schwarzstart des Windparks bei seiner Inbetriebnahme. Den Betrieb bei Netzüberlastung behandeln diese Dokumente nicht.

Um Windenergieanlagen auch bei Stillstand mit Energie versorgen zu können, ohne dazu teuer Leistung aus dem Netz beziehen zu müssen, sind verschiedene Ansätze bekannt geworden. Ein erster Ansatz sieht Energiespeicher vor, die an der Windenergieanlage anzuordnen sind. Sie werden aufgefüllt während des Betriebs der Windenergieanlage, und können dann entsprechend in Phasen des Stillstands den Eigenbedarf der Windenergieanlage versorgen. Dieses Konzept funktioniert grundsätzlich, hat jedoch den Nachteil von recht hohen Anschaffungskosten, da Speicherung von elektrischer Energie stets sehr aufwendig ist. Mit einem anderen Ansatz wird die Speicherungsproblematik umgangen, indem eine Anlage zur Hilfsenergieerzeugung vorgesehen ist. Hierbei kann es sich beispielsweise um eine Fotovoltaik-Anlage oder um eine gesonderte Miniatur-Windturbine handeln, die nur so viel Leistung erzeugen, wie zur Deckung des Eigenbedarfs erforderlich ist. Ein Nachteil dieses Konzepts ist, dass es immer noch relativ kostenintensiv ist, aber trotzdem nicht verlässlich Leistung generiert.

Das Dokument EP 2 824 323 A1 betrifft den Betrieb von Windenergieanlagen als motorische Last gegen den Wind, um einen Überschuss an erzeugter elektrischer Leistung zu absorbieren, zum Beispiel bei einer plötzlichen Trennung eines Windparks vom Netz.

Gemäß Dokument DE 10 2012 204 239 A1 soll das Eindringen oder Absetzen von Feuchtigkeit bei einer noch nicht an ein elektrisches Versorgungsnetz angeschlossenen Windenergieanlage verhindert oder zumindest verringert werden. Dazu wird gelehrt, die Windenergieanlage ohne Einspeisung ins Netz in Betrieb zu nehmen und beispielsweise eine Vorrichtung zum Heizen der Gondel zu versorgen.

Der Erfindung liegt die Aufgabe zugrunde, ausgehend von dem zuletzt genannten Ansatz für den laufenden Betrieb eines Windparks eine verbesserte Leistungsbereitstellung zur Deckung des Eigenbedarfs zu schaffen.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Betreiben eines Windparks an einem Netz umfassend einen Parkmaster und eine Mehrzahl von Windenergieanlagen, die für ihren Betrieb eine Minimalleistung haben, bei der es sich um eine von einer der Mehrzahl von Windenergieanlagen in ihrem Betrieb mindestens erzeugte Leistung handelt, wobei die Windenergieanlagen mindestens eine leistungsverbrauchende Last aufweisen, ist erfindungsgemäß vorgesehen, Hinterlegen der Minimalleistung in dem Parkmaster, Ermitteln von frei zuschaltbaren Lasten der Windenergieanlagen, wobei ein Betrieb der frei zuschaltbaren Lasten in der Regel bei einer stillgesetzten Windenergieanlage (1) nicht erforderlich, aber möglich ist, Erfassen der Leistungswerte der frei zuschaltbaren Lasten, wobei nur Windenergieanlagen in einem abgeschalteten Zustand berücksichtigt werden, Zusammenfassen dieser Leistungswerte zu einer Optionallast (OL), Erfassen eines Leistungsbezugs des Windparks aus dem Netz als Reallast (RL), prüfen, ob Reallast und Optionallast zusammen mindestens so groß sind wie die Minimalleistung, und wenn das der Fall ist, Starten der Windenergieanlage mit dieser Minimalleistung und Betreiben dieser Windenergieanlage; Regeln des Leistungsbezugs aus dem Netz auf einen minimalen Wert oder Nullwert, bei dem der Leistungsbezug aus dem Netz auf null reduziert wird, durch sukzessives Anschalten weiterer oder Abschalten von mindestens einer der zuschaltbaren Lasten.

Unter einer leistungsverbrauchenden Last wird eine Komponente der Windenergieanlage verstanden, welche für ihren Betrieb elektrische Leistung benötigt. Eine solche Komponente ist dann eine frei zuschaltbare Last, wenn der Betrieb dieser Komponente in der Regel bei einer stillgesetzten Windenergieanlage nicht erforderlich, aber im Grundsatz möglich ist; eine solche Komponente kann also eingeschaltet werden bei Stillstand der Windenergieanlage, muss aber nicht. Beispiele hierfür sind Heizungen, beispielsweise Getriebeölheizungen oder Blattheizungen, oder Lüfter, wie sie insbesondere zur Kühlung von Generator oder anderen elektrischen Komponenten im Fall von hoher Generatorlast dienen.

Die Erfindung beruht auf dem Gedanken, die in den einzelnen Windenergieanlagen verfügbaren frei zuschaltbaren Lasten zu ermitteln. Deren Leistungswerte werden erfasst, wobei nur solche Windenergieanlagen berücksichtigt werden, die in einem abgeschalteten Zustand sind, bei denen also die besagten Komponenten in der Tat (weitgehend) frei ein- bzw. ausgeschaltet werden können. Es wird damit eine Liste von im Windpark an den einzelnen Windenergieanlagen vorhandenen Verbrauchern generiert, die auf Wunsch ein- bzw. ausgeschaltet werden können. Deren Leistungsbedarf bildet eine Last, die optional auf Anforderung (in der Regel durch den Parkmaster) zugeschaltet werden kann; dies wird kurz als Optionallast bezeichnet. Ferner besteht im Windpark eine reale Last, die sich aus der Leistung ergibt, die tatsächlich erforderlich ist zur Deckung des Eigenbedarfs der Windenergieanlagen und ggf. weiterer Einrichtungen des Windparks; diese Last wird kurz als Reallast bezeichnet.

Der Kern des erfindungsgemäßen Verfahrens liegt darin zu prüfen, ob auf Grundlage der vorhandenen Reallast durch Zuschalten der Optionallast der Leistungsbedarf auf einen solchen Wert gesteigert werden kann, dass er gleich oder größer ist als die Minimalleistung für den Betrieb von einer der (in der Regel der schwächsten) Windenergieanlage. In diesem Fall wird diese Windenergieanlage (bzw. eine andere mit derselben Minimalleistung) gestartet und betrieben. Mit der von dieser Windenergieanlage erzeugten elektrischen Leistung wird zum einen der tatsächliche Eigenbedarf (Reallast) gedeckt, und die verbleibende Differenz zur Minimalleistung wird durch Zuschalten der frei zuschaltbaren Lasten als Optionallast kompensiert.

Es wird also planvoll ein künstlicher Leistungsbedarf geschaffen durch Zuschalten der Optionallast, um so die für einen Betrieb der Windenergieanlage an sich zu niedrige Reallast zu steigern auf den Wert der Minimalleistung, die für den Betrieb dieser Windenergieanlage erforderlich ist. Es wird also in einem Umfeld, in dem an sich teuer elektrische Leistung aus dem Netz bezogen wird, durch eine paradox erscheinende Steigerung des Leistungsbedarfs erreicht, dass der Leistungsbezug aus dem Netz auf Null reduziert werden kann. Dies ist im Stand der Technik ohne Beispiel.

Es kann die Situation auftreten, dass es bei steigendem Eigenbedarf im Windpark in der Folge dennoch zu einem Leistungsbezug aus dem Netz kommt. Um dies zu vermeiden, ist zweckmäßigerweise vorgesehen, dass zur Vermeidung eines Leistungsbezugs zuschaltbare Lasten abgeschaltet werden und damit die Optionallast verringert wird, und/oder eine Leistungsabgabe der betriebenen Windenergieanlage erhöht wird. Auf diese Weise kann eine wirksame Nullleistungsregelung, d.h. eine Regelung auf Null-Leistungsaustausch mit dem Netz, erfolgen.

Mit Vorteil wird zum Starten diejenige Windenergieanlage ausgewählt, welche die geringste Minimalleistung aufweist. Sind mehrere Windenergieanlagen mit gleicher Minimalleistung vorhanden, so kann eine beliebige davon verwendet werden. Dies bietet den Vorteil, dass damit die Optionallast minimal gewählt werden kann, was die Komplexität des erfindungsgemäßen Verfahrens verringert.

Zweckmäßig ist eine dynamische Bestimmung der frei zuschaltbaren Lasten, und zwar insbesondere unter Berücksichtigung eines aktuellen Zustands der jeweiligen Windenergieanlage. Auf diese Weise kann verhindert werden, dass durch das Schalten der zuschaltbaren Lasten eine Windenergieanlage in ihrer Betriebsfähigkeit negativ beeinflusst wird. So wird beispielsweise dann, wenn die Getriebeöl-Temperatur einen oberen Grenzwert erreicht, die Heizung für das Getriebeöl nicht mehr länger als frei zuschaltbare Last bestimmt. Sie kann dann nicht mehr als Optionallast herangezogen werden. Auf diese Weise wird verhindert, dass es durch Nutzung dieser Heizung als Optionallast zu einer übermäßigen Erwärmung des Getriebeöls kommt.

Mit Vorteil ist vorgesehen, dass in den Windenergieanlagen vorhandene Parameter für Grenzwerte weiterhin gelten, und damit gewisse Komponenten (wie beispielsweise Heizungen) bei Erreichen der Temperaturgrenzen nicht mehr als frei zuschaltbare Lasten zur Verfügung stehen. Die frei zuschaltbare Lasten umfassen vorzugsweise außer Heizungen, insbesondere für Generator, Schaltschrankgehäuse sowie Rotorblätter, auch Lüfter für Generator und/oder Getriebe, oder Pumpen der Windenergieanlagen, beispielsweise Getriebe-Ölpumpen. Komponenten wie Pumpen oder Lüfter haben den Vorteil, dass sie in der Regel über den vollen Temperaturbereich eingesetzt werden können und somit zuverlässig als frei zuschaltbare Last zur Verfügung stehen.

Der Parkmaster generiert zweckmäßigerweise eine zentrale Zusammenstellung der frei zuschaltbaren Lasten, ihre Verfügbarkeit und ihren jeweiligen Leistungswert. Es ist zweckmäßig, wenn er diese Zusammenstellung periodisch aktualisiert. Auf diese Weise wird eine stets aktuelle Anpassung an die jeweils vorherrschenden Betriebs- und Umweltparameter ermöglicht. Zweckmäßigerweise ermittelt der Parkmaster die Leistungsaufnahme des Windparks über einen vorgebbaren Zeitraum. Damit kann eine gegenüber kurzzeitigen Störeinflüssen geschützte Führung des erfindungsgemäßen Verfahrens erreicht werden. Besonders vorteilhaft ist es, wenn der Zeitraum mindestens so lange ist wie eine Zeitdauer, die zum Starten der Windenergieanlage mit der Minimalleistung benötigt wird. Damit ist sichergestellt, dass ausreichend Zeit zum Starten der Windenergieanlage zur Verfügung steht, bevor die nächste Aktualisierung erfolgt.

Die Erfindung bezieht sich ferner auf einen entsprechenden Windpark sowie einen Nachrüstsatz für einen Parkmaster eines bestehenden Windparks. Zur näheren Erläuterung der Funktionsweise wird auf vorstehende Beschreibung verwiesen.

Die Erfindung wird nachfolgend unter Bezug auf die beigefügte Zeichnung anhand eines Ausführungsbeispiels näher erläutert. Es zeigen:

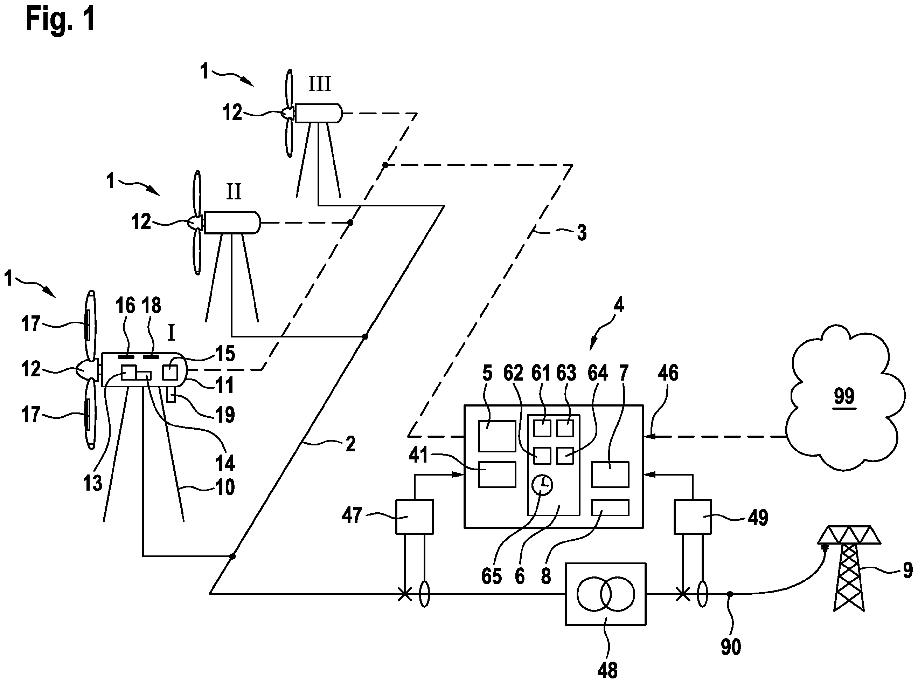

Fig. 1 eine schematische Ansicht eines Windparks mit mehreren Windenergieanlagen gemäß einem Ausführungsbeispiel der Erfindung;
Fig. 2 ein Blockschaltbild darstellend von drei Windenergieanlagen des Windparks zur Verfügung gestellte Optionallasten; und
Fig. 3 ein Ablaufdiagramm zur Veranschaulichung des Verfahrens.

Bei dem dargestellten Ausführungsbeispiel handelt es sich um einen Windpark mit mehreren Windenergieanlagen 1 und einem Parkmaster 4 zur übergeordneten Steuerung der Windenergieanlagen 1. Die Windenergieanlagen 1 können an sich identisch ausgeführt sein; sie sind zur Unterscheidbarkeit der Darstellung mit römischen Zahlen versehen (vorliegend: I, II, III).

Die Windenergieanlagen 1 sind an sich konventionell aufgebaut und umfassen einen Turm 10 mit einer an dessen oberen Ende in Azimutrichtung schwenkbar angeordneten Gondel 11. An einer Stirnseite der Gondel 11 ist ein Windrotor 12 drehbar angeordnet, der einen in der Gondel 11 angeordneten Generator (nicht dargestellt) antreibt. Der Generator wandelt die von dem Windrotor 12 aus dem Wind bezogene mechanische Leistung in elektrische Leistung um, und wirkt mit einem Umrichter (nicht dargestellt) zusammen, um die elektrische Leistung an einem Ausgang der Windenergieanlage 1 abzugeben. Die Windenergieanlagen 1 können typischerweise über einen beträchtlichen Leistungsbereich betrieben werden, jedoch können sie meist nicht bis zur Leistung Null geregelt werden. Für ihren Betrieb benötigen sie eine gewisse Mindestleistung PMin_i, die von ihnen abzugeben ist. Wird diese Leistung unterschritten, muss aus Sicherheitsgründen die Windenergieanlage 1 abgeschaltet werden. Die Mindestleistung ist je nach Anlagentyp verschieden. Die individuelle Mindestleistung PMin_i der jeweiligen i-ten Windenergieanlage wird hierbei durch den Index "i" zum Ausdruck gebracht.

Die im Betrieb von den einzelnen Windenergieanlagen 1 erzeugte Leistung wird über ein parkinternes Sammelnetz 2 und einen Parktransformator 48 übertragen. An den Parktransformator 48 ist ein Übertragungsnetz 9 eines Netzbetreibers angeschlossen über einen Verknüpfungspunkt (point of common coupling - PCC) 90.

Der Windpark umfasst ferner ein Signalnetz 3, über welches ein Parkmaster 4 mit den einzelnen Windenergieanlagen 1 des Windparks kommuniziert, und zwar insbesondere mit einer in der Gondel 11 angeordneten Steuereinrichtung 15 der jeweiligen Windenergieanlage 1. An dem Parkmaster 4 ist ferner ein Eingang 46 vorgesehen, an den von einer übergeordneten Leitstelle 99 abgegebene Führungssignale angeschlossen sind. Ferner sind Leistungsmesseinrichtungen vorgesehen, eine erste Leistungsmesseinrichtung 47 am parkinternen Sammelnetz 2 und eine zweite Leistungsmesseinrichtung 49 an der Verknüpfungsstelle 90.

Die Windenergieanlagen 1 weisen jeweils eine Vielzahl von Komponenten auf, die für den Betrieb der Windenergieanlage benötigt werden. Hierbei handelt es sich insbesondere um Heizungen 16 in der Gondel 11, Blattheizungen 17 an Rotorblättern des Windrotors 12, Lüfter 18 in der Gondel und/oder an einem Getriebe zwischen Windrotor 12 und Generator, einen Azimutantrieb 19 zum Verschwenken der Gondel 11 etc.

In gewissen Situationen, beispielsweise bei einem Überangebot von elektrischer Leistung im Übertragungsnetz 9, kann der Windpark als Ganzes abgeschaltet werden. Dazu wird ein entsprechendes Steuersignal von der übergeordneten Leitstelle 99 an den Parkmaster 4 übermittelt. Der Windpark soll dann keine Leistung mehr in das Übertragungsnetz 9 einspeisen. Maßgebender Messpunkt hierfür ist in der Regel die Verknüpfungsstelle 90, der vorliegend die Leistungsmesseinrichtung 49 zugeordnet ist.

Aber auch in diesem abgeschalteten Zustand benötigen die Windenergieanlagen 1 sowie der Parkmaster 4 und gegebenenfalls weitere Komponenten des Windparks elektrische Energie. Diese wird in der Regel aus dem Übertragungsnetz 9 bezogen, was kostenträchtig ist. Der Parkmaster 4 erfasst diesen realen Verbrauch des Windparks mittels eines Reallast-Detektors 41, an dem zweckmäßigerweise die erste Leistungsmesseinrichtung 47 angeschlossen ist.

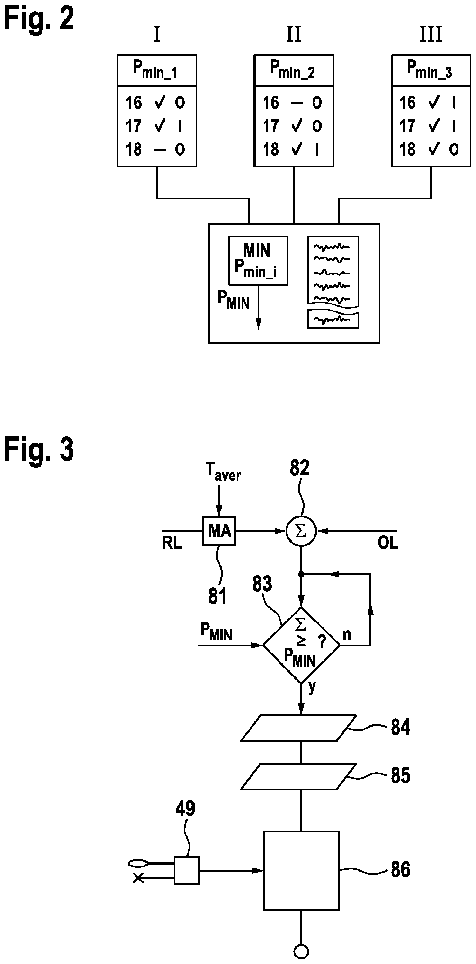

Die meisten Komponenten der Windenergieanlage 1 sind im abgeschalteten Betrieb nicht aktiviert. Allerdings gibt es einige Komponenten, die auf Wunsch aktiviert werden könnten ("frei zuschaltbar"), beispielsweise der Lüfter 18 in der Gondel oder Blattheizungen 17 an Rotorblättern. Bei einigen ist dies immer möglich, bei anderen geht dies nicht immer, beispielsweise bei Heizungen 16 wenn bereits eine kritisch hohe Temperatur in der Gondel 11 herrscht; dann steht die Heizung 16 nicht zur Verfügung. All dies wird für jede einzelne der Windenergieanlagen 1 erfasst, wie in Figur 2 dargestellt ist. Hierbei sind exemplarisch für drei Windenergieanlagen (bezeichnet als I, II und III) Datensätze zu den Optionallasten gebildet, die neben der Art der Komponente (16 für eine Heizung) angeben, ob sie als Optionallast überhaupt zur Verfügung stehen (symbolisiert durch einen Haken für Ja bzw. einen Querstrich für Nein) und ferner den aktuellen Schaltzustand (Ein oder Aus) angeben. Vorzugsweise erfolgt das lokal durch die jeweilige Betriebssteuerung 15. Diese übermittelt die so erfassten Datensätze über das Signalnetz 3 an den Parkmaster 4.

Der Parkmaster 4 weist ferner einen Listenbildner 5 auf, der für die Optionallast die von den einzelnen Windenergieanlagen 1 ermittelten Leistungswerte der frei zuschaltbaren Lasten erfasst. Dieser wirkt zusammen mit einer Steuerlogikeinheit 6, die in einer ersten Komponente 61 eine Summe aus Reallast und Optionallast bestimmt. Ferner ist ein Minimumbildner 62 vorgesehen, welcher diejenige Windenergieanlage 1 des Windparks bestimmt, welche die kleinste Minimalleistung P_{MIN} aufweist. Weiter ist eine Komparatoreinheit 63 vorgesehen, die dazu ausgebildet ist, zu prüfen, ob die von der Komponente 61 gebildete Summe aus Reallast und Optionallast mindestens so groß ist wie die kleinste Minimalleistung P_{MIN}. Wenn das der Fall ist, dann ist die Voraussetzung erfüllt, dass durch Starten der Windenergieanlagen mit dieser kleinsten Minimalleistung der Windpark sich selbst mit der benötigten elektrischen Leistung versorgen kann, wobei ein Überschuss zwischen der mindestens erzeugten Leistung P_{MIN} und der tatsächlich verbrauchten Leistung mittels der Optionallasten kompensiert (im Grunde: "verheizt") werden kann. Es ist eine kombinierte Schalt- und Steuereinheit 64 vorgesehen, die dann eine der Windenergieanlagen, nämlich die mit der kleinsten Minimalleistung, startet und entsprechende Steuerbefehle an die verschiedenen Windenergieanlagen 1 des Windparks zum Einschalten der Optionallasten gibt. Ferner ist ein Zeitgeber 65 vorgesehen, welcher eine Aktualisierung in periodischen Zeitabständen vornimmt, wobei der Zeitabstand mindestens so groß ist wie die zum Starten der Windenergieanlagen 1 benötigte Zeitdauer.

Um sicherzustellen, dass gegenüber dem Übertragungsnetz 9 stets eine Null-Speisung erfolgt, also weder elektrische Leistung aus dem Netz 9 bezogen noch in das Netz 9 eingespeist wird, ist in dem Parkmaster ferner eine Nullleistungsregelung 7 vorgesehen. Diese wirkt mit der zweiten Leistungsmesseinrichtung 49 zusammen. Diese erfasst die Leistung am Verknüpfungspunkt 90, also an der Schnittstelle zum Übertragungsnetz 9. Wird (zu viel) Leistung aus dem Netz 9 bezogen, so wirkt die Nullleistungsregelung 7 mit der Steuerlogik 6 derart zusammen, dass mindestens eine der Optionallasten abgeschaltet wird, um so den Leistungsbezug zu verringern; erfolgt eine Einspeisung von Leistung in das Netz 9, so wird entsprechend eine weitere Optionallast hinzugeschaltet, um der Anforderung des Netzbetreibers 99 nachzukommen, keine Leistung in das Übertragungsnetz 9 einzuspeisen.

Ferner ist eine Harmonisator-Einheit 8 vorgesehen. Diese wirkt mit der Steuerlogik 6 derart zusammen, dass sie die Einschaltdauer der verschiedenen Optionallasten überwacht. Komponenten mit geringer Einschaltdauer werden ermittelt und werden nachfolgend bevorzugt als Optionallast geschaltet. Auf diese Weise wird ein Ausgleich im Hinblick auf die Belastung der Komponenten als Optionallast über die verschiedenen Windenergieanlagen 1 des Windparks hinweg erreicht.

Die Funktionsweise ist im Ablaufdiagramm gemäß Figur 3 illustriert. Zu Beginn wird der tatsächliche Leistungsbezug (Reallast) ermittelt und vorzugsweise durch eine Filterung 81 (MA - gleitender Mittelwert) geglättet über eine einstellbare Zeitdauer Tₐᵥₑᵣ (z. B. als Mittelwert über 10 Minuten). Deren Ausgang ist angelegt an einen ersten Eingang eines Summierglieds 82. An dessen zweiten Eingang sind die Werte für die von dem Listenbildner 5 ermittelten zur Verfügung stehenden Optionallast angelegt. Von einem Komparator 83 wird geprüft, ob dieser Wert größer ist als die kleinste Mindestleistung P_{MIN}. Ist das nicht der Fall, dann wird zurückgesprungen und die Abfrage wiederholt. Ist der Wert größer, dann erfolgt in Schritt 84 ein Startbefehl an eine der Windenergieanlagen mit der besagten kleinsten Minimalleistung und in Schritt 85 ein Schaltbefehl zum Aktivieren der entsprechenden Optionallasten. Nachfolgend erfolgt dann in Schritt 86 eine Regelung auf Null-Speisung in Bezug auf das Übertragungsnetz 9.

Somit kann erfindungsgemäß ein (teurer) Leistungsbezug aus dem Netz 9 auch bei einem an sich nicht in Betrieb befindlichen Windpark mit seinen Windenergieanlagen vermieden werden, wobei ein wegen Unterschreiten der Mindestleistung an sich nicht selbst deckbarer Eigenbedarf durch Zuschalten von Optionallasten so weit vergrößert werden kann, dass zumindest die kleinste der Windenergieanlagen 1 gestartet werden kann und damit eine autarke Leistungsversorgung im Windpark erreicht werden kann. Der (teure) Leistungsbezug aus dem Netz kann damit auf Null gebracht werden.

## Patentansprüche

1. Verfahren zum Betreiben eines Windparks an einem Netz (9) umfassend einen Parkmaster (4) und eine Mehrzahl von Windenergieanlagen (1), die für ihren Betrieb eine Minimalleistung (Pmin_i) haben, bei der es sich um eine von einer der Mehrzahl von Windenergieanlagen (1) in ihrem Betrieb mindestens erzeugte Leistung handelt, wobei die Windenergieanlagen (1) mindestens eine leistungsverbrauchende Last aufweisen
**gekennzeichnet durch**
Hinterlegen der Minimalleistung in dem Parkmaster (4), Ermitteln von frei zuschaltbaren Lasten der Windenergieanlagen (1), wobei ein Betrieb der frei zuschaltbaren Lasten in der Regel bei einer stillgesetzten Windenergieanlage (1) nicht erforderlich, aber möglich ist,
Erfassen der Leistungswerte der frei zuschaltbaren Lasten, wobei nur Windenergieanlagen (1) in einem abgeschalteten Zustand berücksichtigt werden,
Zusammenfassen dieser Leistungswerte zu einer Optionallast (OL),
Erfassen eines Leistungsbezugs des Windparks aus dem Netz als Reallast (RL),
Prüfen, ob Reallast und Optionallast zusammen mindestens so groß sind wie die Minimalleistung (P_{MIN}), und wenn das der Fall ist, Starten der Windenergieanlage (1) mit dieser Minimalleistung und Betreiben dieser Windenergieanlage (1); Regeln des Leistungsbezugs aus dem Netz (9) auf einen minimalen Wert oder Nullwert, bei dem der Leistungsbezug aus dem Netz auf null reduziert wird, durch sukzessives Anschalten weiterer oder Abschalten von mindestens einer der zuschaltbaren Lasten.

2. Verfahren nach Anspruch 1, **dadurch gekennzeichnet, dass** zum Netz eine Nullleistungsregelung erfolgt, wobei zur Vermeidung von Leistungsbezug zuschaltbare Lasten abgeschaltet und/oder eine Leistungsabgabe der betriebenen Windenergieanlage erhöht wird.

3. Verfahren nach Anspruch 1 oder 2, **dadurch gekennzeichnet, dass** zum Starten diejenige Windenergieanlage ausgewählt wird, welche die geringste Minimalleistung aufweist.

4. Verfahren nach einem der vorangehenden Ansprüche, **dadurch gekennzeichnet, dass** die frei zuschaltbaren Lasten dynamisch bestimmt werden, insbesondere unter Berücksichtigung eines aktuellen Zustands der jeweiligen Windenergieanlage.

5. Verfahren nach Anspruch 4, **dadurch gekennzeichnet, dass** Heizungseinrichtungen der Windenergieanlagen nur dann als frei zuschaltbare Last berücksichtigt werden, wenn ein zugeordneter Temperaturgrenzwert unterschritten ist.

6. Verfahren nach einem der vorangehenden Ansprüche, **dadurch gekennzeichnet, dass** die frei zuschaltbare Last Lüfter für Generator und/oder Getriebe, Pumpen der Windenergieanlagen, insbesondere Getriebe-Ölpumpe, Generator-, Schaltschrank, Gehäuseheizungen sowie Blattheizungen umfasst.

7. Verfahren nach einem der Ansprüche 4 bis 6, **dadurch gekennzeichnet, dass** der Parkmaster zentral eine Zusammenstellung der frei zuschaltbaren Lasten, ihre Verfügbarkeit und ihren jeweiligen mittleren Leistungswert generiert, und vorzugsweise periodisch aktualisiert.

8. Verfahren nach einem der vorangehenden Ansprüche, **dadurch gekennzeichnet, dass** der Parkmaster die Leistungsaufnahme des Windparks über einen vorgebbaren Zeitraum ermittelt.

9. Verfahren nach Anspruch 8, **dadurch gekennzeichnet, dass** der Zeitraum mindestens so lange ist wie eine zum Starten der Windenergieanlage mit Minimalleistung benötigte Zeitdauer.

10. Windpark umfassend eine Mehrzahl von Windenergieanlagen (1) und einen Parkmaster (4), wobei der Windpark zur Leistungsübertragung über einen Verknüpfungspunkt (90) mit einem Netz (9) verbunden ist, und eine Einrichtung zur Erfassung (49) der Leistungsübertragung am Verknüpfungspunkt (90) vorgesehen ist, wobei die Windenergieanlagen (1) eine Minimalleistung (Pmin_i) für ihren Betrieb haben, bei der es sich um eine von einer der Mehrzahl von Windenergieanlagen (1) in ihrem Betrieb mindestens erzeugte Leistung handelt, und mindestens eine leistungsverbrauchende Last umfassen, **dadurch gekennzeichnet, dass**
der Parkmaster (4) dazu ausgebildet ist, die Minimalleistung und frei zuschaltbare Lasten der Windenergieanlagen (1) zu erfassen, wobei ein Betrieb der frei zuschaltbaren Lasten in der Regel bei einer stillgesetzten Windenergieanlage (1) nicht erforderlich, aber möglich ist, und mittels eines Minimumbildners (62) die Windenergieanlage mit der kleinsten Minimalleistung (P_{MIN}) zu bestimmen, wobei nur abgeschaltete Windenergieanlagen berücksichtigt werden, und der Parkmaster (4) einen Listenbildner (5), der dazu ausgebildet ist aus den Leistungswerten der frei zuschaltbaren Lasten eine Optionallast zu bestimmen, eine Komparatoreinheit (63) und eine Steuerlogikeinheit (6) aufweist, die dazu ausgebildet sind zu prüfen, ob Reallast und Optionallast zusammen mindestens so groß sind wie die kleinste Minimalleistung, und in diesem Fall die Windenergieanlage mit der kleinsten Minimalleistung zu starten und zu betreiben, und ferner
eine Schalteinheit (64) vorgesehen ist, die dazu ausgebildet ist, den Leistungsbezug aus dem Netz (9) durch sukzessives Anschalten weiterer oder Abschalten von mindestens einer der zuschaltbaren Lasten zu regeln.

11. Windpark nach Anspruch 10, **dadurch gekennzeichnet, dass** der Parkmaster zur Ausführung des Verfahrens nach einem der Ansprüche 1 bis 9 ausgeführt ist.

12. Nachrüstsatz für einen Parkmaster (4) eines Windparks, wobei der Windpark eine Mehrzahl von Windenergieanlagen (1) umfasst und zur Leistungsübertragung über einen Verknüpfungspunkt (90) mit einem Netz (9) verbunden ist, und eine Einrichtung zur Erfassung (49) der Leistungsübertragung am Verknüpfungspunkt (90) vorgesehen ist, wobei die Windenergieanlagen (1) eine Minimalleistung (Pmin_i) für ihren Betrieb haben, bei der es sich um eine von einer der Mehrzahl von Windenergieanlagen (1) in ihrem Betrieb mindestens erzeugte Leistung handelt, und mindestens eine leistungsverbrauchende Last umfassen,
**dadurch gekennzeichnet, dass**
der Nachrüstsatz den Parkmaster (4) mit einem Listenbildner (5), der dazu ausgebildet ist, aus den Leistungswerten von frei zuschaltbaren Lasten der Windenergieanlagen (1) eine Optionallast zu bestimmen, wobei ein Betrieb der frei zuschaltbaren Lasten in der Regel bei einer stillgesetzten Windenergieanlage (1) nicht erforderlich, aber möglich ist, und einer Steuerlogikeinheit (6) mit einer Komparatoreinheit (63) weiterbildet, die dazu ausgebildet sind zu prüfen, ob Reallast und Optionallast zusammen mindestens so groß sind wie die kleinste Minimalleistung, und in diesem Fall die Windenergieanlage mit der kleinsten Minimalleistung zu starten und zu betreiben, und
der Nachrüstsatz ferner eine Schalteinheit (64) vorsieht, die dazu ausgebildet ist, den Leistungsbezug aus dem Netz (9) durch sukzessives Anschalten weiterer oder Abschalten von mindestens einer der zuschaltbaren Lasten zu regeln.

13. Nachrüstsatz nach Anspruch 12, **dadurch gekennzeichnet, dass** der Nachrüstsatz den Parkmaster zur Ausführung des Verfahrens nach einem der Ansprüche 1 bis 9 weiterbildet.

## Claims

1. Method for operating a wind farm on a grid (9) comprising a farm master (4) and a plurality of wind turbines (1) which have a minimum power (Pmin_i) for their operation, the minimum power being a power generated at least by one of the plurality of wind turbines (1) during their operation, wherein the wind turbines (1) have at least one power-consuming load,
**characterized by**
storing the minimum power in the farm master (4), ascertaining freely connectable loads of the wind turbines (1), wherein operation of the freely connectable loads is usually not required, but is possible, when a wind turbine (1) is shut down,
recording the power values of the freely connectable loads, wherein only wind turbines (1) in a switched-off state are taken into consideration,
combining these power values to give an optional load (OL),
recording a power consumption of the wind farm from the grid as real load (RL),
checking whether real load and optional load together are at least as great as the minimum power (P_{MIN}), and if that is the case, starting the wind turbine (1) having this minimum power and operating this wind turbine (1); regulating the power consumption from the grid (9) to a minimum value or zero value, at which the power consumption from the grid is reduced to zero, by successively switching on further connectable loads or switching off at least one of the connectable loads.

2. Method according to Claim 1, **characterized in that** zero-power regulation with respect to the grid is performed, wherein, in order to avoid power being consumed, connectable loads are switched off and/or a power output of the operated wind turbine is increased.

3. Method according to Claim 1 or 2, **characterized in that**, in order to start, the wind turbine which has the lowest minimum power is chosen.

4. Method according to one of the preceding claims, **characterized in that** the freely connectable loads are determined dynamically, in particular taking into consideration a current state of the respective wind turbine.

5. Method according to Claim 4, **characterized in that** heating devices of the wind turbines are only considered to be a freely connectable load when an assigned temperature limit value is undershot.

6. Method according to one of the preceding claims, **characterized in that** the freely connectable load comprises fans for a generator and/or transmission, pumps of the wind turbines, in particular a transmission oil pump, generator heaters, switchgear cabinet, housing heaters and blade heaters.

7. Method according to one of Claims 4 to 6, **characterized in that** the farm master centrally generates a compilation of the freely connectable loads, their availability and their respective average power value, and preferably periodically updates said compilation.

8. Method according to one of the preceding claims, **characterized in that** the farm master ascertains the power consumption of the wind farm over a predefinable period of time.

9. Method according to Claim 8, **characterized in that** the period of time is at least as long as a duration required for starting the wind turbine having minimum power.

10. Wind farm comprising a plurality of wind turbines (1) and a farm master (4), wherein the wind farm is connected to a grid (9) via a point of common coupling (90) for the purpose of power transmission, and a device (49) for recording the power transmission is provided at the point of common coupling (90), wherein the wind turbines (1) have a minimum power (Pmin_i) for their operation, the minimum power being a power generated at least by one of the plurality of wind turbines (1) during their operation, and comprise at least one power-consuming load,
**characterized in that**
the farm master (4) is configured to record the minimum power and freely connectable loads of the wind turbines (1), wherein operation of the freely connectable loads is usually not required, but is possible, when a wind turbine (1) is shut down, and to determine the wind turbine having the smallest minimum power (P_{MIN}) by means of a minimum former (62), wherein only wind turbines that are switched off are taken into consideration, and the farm master (4) has a list former (5), which is configured to determine an optional load from the power values of the freely connectable loads, a comparator unit (63) and a control logic unit (6), which are configured to check whether real load and optional load together are at least as great as the smallest minimum power, and in this case to start and to operate the wind turbine having the smallest minimum power, and furthermore
a switching unit (64) is provided, which is configured to regulate the power consumption from the grid (9) by successively switching on further connectable loads or switching off at least one of the connectable loads.

11. Wind farm according to Claim 10, **characterized in that** the farm master is configured to execute the method according to one of Claims 1 to 9.

12. Retrofit kit for a farm master (4) of a wind farm, wherein the wind farm comprises a plurality of wind turbines (1) and is connected to a grid (9) via a point of common coupling (90) for the purpose of power transmission, and a device (49) for recording the power transmission is provided at the point of common coupling (90), wherein the wind turbines (1) have a minimum power (Pmin_i) for their operation, the minimum power being a power generated at least by one of the plurality of wind turbines (1) during their operation, and comprise at least one power-consuming load,
**characterized in that**
the retrofit kit develops the farm master (4) with a list former (5), which is configured to determine an optional load from the power values of freely connectable loads of the wind turbines (1), wherein operation of the freely connectable loads is usually not required, but is possible, when a wind turbine (1) is shut down, and with a control logic unit (6) with a comparator unit (63), which are configured to check whether real load and optional load together are at least as great as the smallest minimum power, and in this case to start and to operate the wind turbine having the smallest minimum power, and
the retrofit kit further provides a switching unit (64), which is configured to regulate the power consumption from the grid (9) by successively switching on further connectable loads or switching off at least one of the connectable loads.

13. Retrofit kit according to Claim 12, **characterized in that** the retrofit kit develops the farm master to execute the method according to one of Claims 1 to 9.

## Revendications

1. Procédé d'exploitation d'un parc éolien sur un réseau (9) comprenant un maître de parc (4) et une pluralité d'éoliennes (1) qui ont pour leur fonctionnement une puissance minimale (Pmin_i) qui est une puissance au moins générée par l'une de la pluralité d'éoliennes (1) pendant son fonctionnement, les éoliennes (1) comportant au moins une charge consommatrice de puissance,
**caractérisé par** les étapes suivantes
stocker la puissance minimale dans le maître de parc (4), déterminer des charges librement connectables des éoliennes (1), le fonctionnement des charges librement connectables étant généralement non nécessaire, mais est possible, lorsque l'éolienne (1) est à l'arrêt, détecter les valeurs de puissance des charges librement connectables, seules les éoliennes (1) à l'état déconnecté étant prises en compte,
combiner ces valeurs de puissance pour obtenir une charge optionnelle (OL),
détecter une consommation de puissance du parc éolien comme charge réelle (RL) sur le réseau,
vérifier si la charge réelle et la charge optionnelle sont conjointement au moins égales à la puissance minimale (P_{MIN}) et, si tel est le cas, démarrer l'éolienne (1) avec cette puissance minimale et faire fonctionner cette éolienne (1) ;
réguler la consommation de puissance sur le réseau (9) à une valeur minimale ou valeur nulle à laquelle la consommation de puissance sur le réseau est réduite à zéro, par connexion ou déconnexion successives d'au moins une des charges connectables.

2. Procédé selon la revendication 1, **caractérisé en ce qu'**une régulation de puissance nulle est effectuée pour le réseau, des charges connectables étant déconnectées et/ou une puissance de sortie de l'éolienne exploitée étant augmentée afin d'éviter de consommer de la puissance.

3. Procédé selon la revendication 1 ou 2, **caractérisé en ce que** l'éolienne qui a la puissance minimale la plus faible est choisie pour le démarrage.

4. Procédé selon l'une des revendications précédentes, **caractérisé en ce que** les charges librement connectables sont déterminées dynamiquement, notamment par prise en compte d'un état actuel de l'éolienne respective.

5. Procédé selon la revendication 4, **caractérisé en ce que** des dispositifs de chauffage des éoliennes ne sont pris en compte comme charge librement connectable que lorsqu'une valeur de température limite associée n'est pas atteinte.

6. Procédé selon l'une des revendications précédentes, **caractérisé en ce que** la charge librement connectable comprend des ventilateurs destinés au générateur et/ou à la transmission, des pompes des éoliennes, notamment des pompes à huile de transmission, des armoires de générateur, des armoires de commande, des réchauffeurs de boîtier et des réchauffeurs de pale.

7. Procédé selon l'une des revendications 4 à 6, **caractérisé en ce que** le maître de parc génère un récapitulatif des charges librement connectables, leur disponibilité et leur valeur de puissance moyenne respective, et de préférence les actualise périodiquement.

8. Procédé selon l'une des revendications précédentes, **caractérisé en ce que** le maître de parc détermine la puissance du parc éolien sur une durée spécifiée.

9. Procédé selon la revendication 8, **caractérisé en ce que** la durée est au moins égale à une durée nécessaire pour démarrer l'éolienne avec une puissance minimale.

10. Parc éolien comprenant une pluralité d'éoliennes (1) et un parc maître (4), le parc éolien étant relié à un réseau (9) par le biais d'un nœud (90) pour la transmission de puissance, et un dispositif (49) de détection de la transmission de puissance étant prévu au niveau du nœud (90), les éoliennes (1) ayant pour leur fonctionnement une puissance minimale (Pmin_i) qui est une puissance au moins générée par l'une de la pluralité d'éoliennes (1) pendant leur fonctionnement, et comprenant au moins une charge consommatrice de puissance,
**caractérisé en ce que**
le maître de parc (4) est conçu pour détecter la puissance minimale et les charges librement connectables des éoliennes (1), le fonctionnement des charges librement connectables étant généralement non nécessaire, mais possible, lorsque l'éolienne (1) est à l'arrêt, et pour déterminer l'éolienne ayant la plus petite puissance minimale (P_{MIN}) au moyen d'un générateur de minimum (62), seules les éoliennes déconnectées étant prises en compte, et le maître de parc (4) comportant un générateur de liste (5) qui est conçu pour déterminer une charge optionnelle à partir des valeurs de puissance des charges librement connectables, une unité formant comparateur (63) et une unité formant logique de commande (6) qui sont conçues pour vérifier si la charge réelle et la charge optionnelle sont conjointement au moins égales à la plus petite puissance minimale et, dans ce cas, pour démarrer et faire fonctionner l'éolienne ayant la plus petite puissance minimale, et en outre
une unité de commutation (64) est également prévue, qui est conçue pour réguler la consommation de puissance sur le réseau (9) par connexion ou déconnexion successivement d'au moins une des charges connectables.

11. Parc éolien selon la revendication 10, **caractérisé en ce que** le maître de parc est conçu pour mettre en œuvre le procédé selon l'une des revendications 1 à 9.

12. Ensemble d'équipement destiné à un maître de parc (4) d'un parc éolien, le parc éolien comprenant une pluralité d'éoliennes (1) et étant relié à un réseau (9) par le biais d'un nœud (90) en vue de la transmission de puissance, et un dispositif de détection (49) de la transmission de puissance étant prévu au niveau du nœud (90), les éoliennes (1) ayant pour leur fonctionnement une puissance minimale (Pmin_i) qui est une puissance au moins générée par l'une de la pluralité d'éoliennes (1) pendant leur fonctionnement, et comprenant au moins une charge consommatrice de puissance,
**caractérisé en ce que**
l'ensemble d'équipement perfectionne le maître de parc (4) avec un générateur de liste (5) qui est conçu pour déterminer une charge optionnelle à partir des valeurs de puissance des charges librement connectables des éoliennes (1), le fonctionnement des charges librement connectables étant généralement non nécessaire, mais possible, lorsque l'éolienne (1) est à l'arrêt et avec une unité formant logique de commande (6) pourvue d'une unité formant comparateur (63) qui est conçue pour vérifier si la charge réelle et la charge optionnelle sont conjointement au moins égales à la plus petite puissance minimale et, dans ce cas, pour démarrer et faire fonctionner l'éolienne ayant la plus petite puissance minimale, et
l'ensemble d'équipement prévoit également une unité de commutation (64) qui est conçue pour réguler la consommation de puissance sur le réseau (9) successivement par connexion d'autres charges connectables ou déconnexion d'au moins une des charges connectables.

13. Ensemble d'équipement selon la revendication 12, **caractérisé en ce que** l'ensemble d'équipement perfectionne en outre le maître de parc pour mettre en œuvre le procédé selon l'une des revendications 1 à 9.
